# EUROPÄISCHE PATENTSCHRIFT

(11) **EP 4 096 974 B1**
(45) Veröffentlichungstag und Bekanntmachung des Hinweises auf die Patenterteilung: **25.10.2023**
(21) Anmeldenummer: 21701792.0
(22) Anmeldetag: 25.01.2021
(51) Int. Cl.: B60T 7/12

(54) **VERFAHREN UND VORRICHTUNG ZUM BETREIBEN EINER ANTIBLOCKIERSYSTEM-STEUEREINHEIT FÜR EIN HOCHAUTOMATISIERTES FAHRZEUG MIT ZUMINDEST EINER LENKACHSE**
METHOD AND SYSTEM FOR OPERATING THE CONTROL UNIT OF AN ANTILOCK SYSTEM OF A HIGHLY AUTOMATED VEHICLE WITH AT LEAST A STEERING AXIS
PROCÉDÉ ET SYSTÈME POUR OPERER L'UNITÉ DE CONTRÔLE DE L'ANTIBLOCAGE D'UN VÉHICULE HAUTE AUTOMATION AVEC AU MOINS UN ESSIEU DIRECTEUR

(30) Priorität: 27.01.2020 DE 102020101811
(43) Veröffentlichungstag der Anmeldung: 07.12.2022
(73) Patentinhaber: KNORR-BREMSE Systeme für Nutzfahrzeuge GmbH, 80809 München (DE)
(72) Erfinder: HECKER, Falk, 71706 Markgröningen (DE); LEIBBRAND, Jonas, 75223 Niefern-Öschelbronn (DE); HUMMEL, Stefan, 70191 Stuttgart (DE); TELGES, Hendrik, 70192 Stuttgart (DE)
(86) Internationale Anmeldenummer: PCT/EP2021/051565
(87) Internationale Veröffentlichungsnummer: WO 2021/151815

(56) Entgegenhaltungen:
- EP-A2- 2 357 112
- WO-A1-98/03384
- DE-A1-102006 024 617
- DE-A1-102017 218 488
- DE-A1-102018 202 885

## Beschreibung

Die Vorliegende Erfindung bezieht sich auf ein Verfahren und eine Vorrichtung zum Betreiben einer Antiblockiersystem-Steuereinheit für ein hochautomatisiertes Fahrzeug mit zumindest einer Lenkachse und eine Antiblockiersystem-Steuereinheit mit einer Vorrichtung.

Bei einem Ausfall einer elektrisch ansteuerbaren Lenkung eines hochautomatisierten Fahrzeugs können als Rückfallebene andere Fahrfunktionen des Fahrzeugs zum Einsatz kommen, um eine Lenkung des Fahrzeugs weiterhin sicherzustellen, beispielsweise eine Lenkbremsfunktion des Fahrzeugs.

Vor diesem Hintergrund ist es die Aufgabe der Erfindung ein verbessertes Verfahren zum Betreiben einer Antiblockiersystem-Steuereinheit für ein hochautomatisiertes Fahrzeug mit zumindest einer Lenkachse, eine verbesserte Vorrichtung zum Betreiben einer Antiblockiersystem-Steuereinheit für ein hochautomatisiertes Fahrzeug mit zumindest einer Lenkachse und eine verbesserte Antiblockiersystem-Steuereinheit mit einer Vorrichtung zu schaffen. Die EP 2 357 112 A2 beschreibt ein Verfahren zum Ansteuern zumindest einer Parkbremseinrichtung.

Diese Aufgabe wird durch ein Verfahren zum Betreiben einer Antiblockiersystem-Steuereinheit für ein hochautomatisiertes Fahrzeug mit zumindest einer Lenkachse mit den Merkmalen des Verfahrensanspruchs 1, durch eine Vorrichtung nach Anspruch 8, durch eine Antiblockiersystem-Steuereinheit nach Anspruch 9 und durch ein Computerprogramm nach Anspruch 10 gelöst. ,

Die mit der vorgestellten Erfindung erreichbaren Vorteile bestehen darin, dass bei einem Ausfall einer elektrisch ansteuerbaren Lenkung eines hochautomatisierten Fahrzeugs ein Rückfall auf eine Lenkbremsfunktion ermöglicht wird, bei der ein harmonischer Lenkwinkel für eine Lenkachse einstellt wird.

Ein Verfahren zum Betreiben einer Antiblockiersystem-Steuereinheit für ein hochautomatisiertes Fahrzeug mit zumindest einer Lenkachse weist einen Schritt des Einlesens und einen Schritt des Sendens auf. Im Schritt des Einlesens wird ein Aktivierungssignal eingelesen, das eine aktivierte Lenkbremsfunktion des Fahrzeugs und zusätzlich oder alternativ eine deaktivierte elektrisch ansteuerbare Lenkfunktion des Fahrzeugs repräsentiert. Im Schritt des Sendens wird unter Verwendung oder ansprechend auf das Aktivierungssignal ein Regelsignal gesendet, das dazu ausgebildet ist, um einen Regelmodus zum Regeln einer ABS-Funktion der Antiblockiersystem-Steuereinheit für zumindest die Lenkachse des Fahrzeugs einzustellen.

Dieses Verfahren kann beispielsweise in Software oder Hardware oder in einer Mischform aus Software und Hardware beispielsweise in einem Steuergerät implementiert sein.

Das Fahrzeug kann eine oder mehrere Lenkachsen aufweisen. Beispielsweise kann das Fahrzeug ein Nutzfahrzeug wie ein Lastkraftwagen oder Sattelkraftfahrzeug sein. Das Fahrzeug kann ferner zumindest einen Trailer (Anhänger) aufweisen, welcher zumindest eine Lenkachse aufweisen kann. Im Falle eines Sattelkraftfahrzeugs können die Sattelzugmaschine und zusätzlich oder alternativ der Sattelauflieger zumindest eine Lenkachse aufweisen. Bei der Lenkbremsfunktion kann es sich um eine sogenannte "Steer-by-brake"-Funktion handeln, welche als Rückfallebene für eine ausgefallene elektrisch ansteuerbare Lenkfunktion eingesetzt werden kann. Bei einer solchen "Steer-by-brake"-Funktion kann vorteilhafterweise ein auf einzelne Räder des Fahrzeugs bewirkter Bremsdruck zu einem Einlenken des Fahrzeugs führen. Vorteilhafterweise kann im Schritt des Sendens ein Regelmodus eingestellt werden, der dazu ausgebildet ist, um Bremsmomente des ersten Rads und des zweiten Rads der Lenkachse zu harmonisieren, um so erzeugte Lenkmomente zu minimieren.

Beispielsweise kann im Schritt des Senden das Regelsignal gesendet werden, das dazu ausgebildet ist, um einen Regelmodus der ABS-Funktion für zumindest die Lenkachse einzustellen, bei dem dasjenige Rad der Lenkachse oder des Fahrzeugs mit einer geringsten Bodenhaftung und/oder Bodenreibung einen Bremsdruck der Lenkachse bestimmt.

Wenn das Rad mit dem geringsten Reibwert als Referenz zum Einstellen des Bremsdrucks genutzt wird, kann vorteilhafterweise ein gleichmäßiger und insgesamt geringerer Bremsdruck für die Lenkachse eingestellt werden, als bei einem individuellen Bremsen der Räder abhängig von beispielsweise lediglich der individuellen Bodenhaftung. Ein Einlenkvorgang erfolgt somit harmonisch und ein Giermoment auf eine Gierachse des Fahrzeugs bleibt gering. Ein solcher Regelmodus kann auch als sogenannter "Select-Low-Regelmodus" bezeichnet werden. Im "Select-Low-Regelmodus" kann vorteilhafterweise nur ein Drucksteuerventil pro Achse zum Einsatz kommen. Ausschlaggebend für die Ansteuerung bei µ-Spiit-Bedingungen, also bei unterschiedlichem Belag für das rechte und linke Rad der Lenkachse, z. B. bei Schnee und Asphalt, ist hierbei wie bereits erwähnt immer das Rad mit dem niedrigeren Reibwert.

Das Verfahren kann ferner einen Schritt des Ansteuerns aufweisen, in dem ansprechend auf das Aktivierungssignal ein Ventilgleichtaktsignal ausgegeben wird, das dazu ausgebildet ist, um eine Ansteuerung von zumindest zwei pneumatischen Regelventilen eines Antiblockiersystems in einem Gleichtakt zu bewirken. So kann sichergestellt werden, dass die resultierenden Bremsdrücke tatsächlich gleich verlaufen und ein Einlenken somit, beispielsweise an einer oder mehreren Lenkachsen des Fahrzeugs, harmonisch verläuft. Bei den pneumatischen Regelventilen kann es sich um Druckregelventile, kurz "PCV"s (Pressure Control Valve) handeln.

Es ist weiterhin von Vorteil, wenn das Verfahren einen Schritt des Begrenzens aufweist, in dem ansprechend auf das Aktivierungssignal ein Begrenzungssignal ausgegeben wird, das dazu ausgebildet ist, um einen maximalen Druckaufbaugradienten für ein pneunatisches Ventil an zumindest der Lenkachse zu begrenzen. Dies ermöglicht einen gleichzeitigen und somit harmonischen Aufbau von Bremsdruck an beiden Rädern der Lenkachse. Hierbei kann das Begrenzungssignal dazu ausgebildet sein, um den maximalen Druckaufbaugradienten innerhalb einer bestimmten Zeitspanne eines Bremsvorgangs zu bewirken, beispielsweise am Anfang des Bremsvorgangs.

Gemäß einer Ausführungsform kann das Verfahren ferner einen Schritt des Verringerns aufweisen, in dem ansprechend auf das Aktivierungssignal ein Verringerungssignal ausgegeben wird, das dazu ausgebildet ist, um einen Zielschlupfwert für die ABS-Funktion an zumindest der Lenkachse zu verringern. Auch so kann ein Einlenkvorgang harmonisch erfolgen.

Das Verfahren kann weiterhin einen Schritt des Einstellens aufweisen, in dem ansprechend auf das Aktivierungssignal ein erstes Zielschlupfsignal ausgegeben wird, das dazu ausgebildet ist, um für das erste Rad der Lenkachse einen ersten Zielschlupfwert einzustellen und ein zweites Zielschlupfsignal ausgegeben wird, das dazu ausgebildet ist, um für das zweite Rad der Lenkachse einen zweiten Zielschlupfwert einzustellen, der sich von dem ersten Zielschlupfwert unterscheidet. Dies erlaubt ein bewusstes Induzieren eines Lenkmoments.

Das Verfahren kann einen Schritt des Ausgebens aufweisen, in dem ansprechend auf das Aktivierungssignal und unter Verwendung eines Lenksignals, das ein Lenkmoment an der Lenkachse repräsentiert, ein Hinterachssignal ausgegeben wird, das dazu ausgebildet ist, um eine Bremskraft an zumindest einer Hinterachse des Fahrzeugs einzustellen. Das Lenkmoment kann ein vorbestimmtes Lenkmoment sein, das beispielsweise ein bevorstehendes Gieren des Fahrzeugs ankündigt. Hierbei kann ein Hinterachssignal ausgegeben werden, das dazu ausgebildet ist, um eine Bremskraft einzustellen, die dazu abgebildet ist, um ein Gieren des Fahrzeugs zu verhindern. Dies ermöglicht ein Balancieren der Bremskraft an der Hinterachse, dass das entstehende Giermoment beispielsweise gerade noch so durch das Lenkmoment an der Lenkachse kompensiert wird. Vorteilhafterweise kann durch das Aktivierungssignal ein Bremswegs des Fahrzeugs gegenüber lediglich einer eingestellten Select-Low-Regelung verkürzt werden.

Die vorgestellte Erfindung schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Eine Antiblockiersystem-Steuereinheit weist die vorangehend beschriebene Vorrichtung auf und ist zur Verwendung für ein hochautomatisiertes Fahrzeug mit zumindest einer Lenkachse ausgebildet. Die Vorrichtung kann mit der Antiblockiersystem-Steuereinheit signaltechnisch verbunden oder in die Antiblockiersystem-Steuereinheit implementiert sein.

Ausführungsbeispiele der hier vorgestellten Erfindung werden in der nachfolgenden Beschreibung mit Bezug zu den Figuren näher erläutert. Es zeigen:
Fig. 1 eine schematische Darstellung eines hochautomatisierten Fahrzeugs mit zumindest einer Lenkachse und einer Antiblockiersystem-Steuereinheit und mit einer Vorrichtung zum Betreiben der Antiblockiersystem-Steuereinheit gemäß einem Ausführungsbeispiel; und
Fig. 2 eine schematische seitliche Darstellung eines Fahrzeugs mit einer Vorrichtung gemäß einem Ausführungsbeispiel; und
Fig. 3 ein Ablaufdiagramm eines Verfahrens zum Betreiben einer Antiblockiersystem-Steuereinheit für ein hochautomatisiertes Fahrzeug mit zumindest einer Lenkachse gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

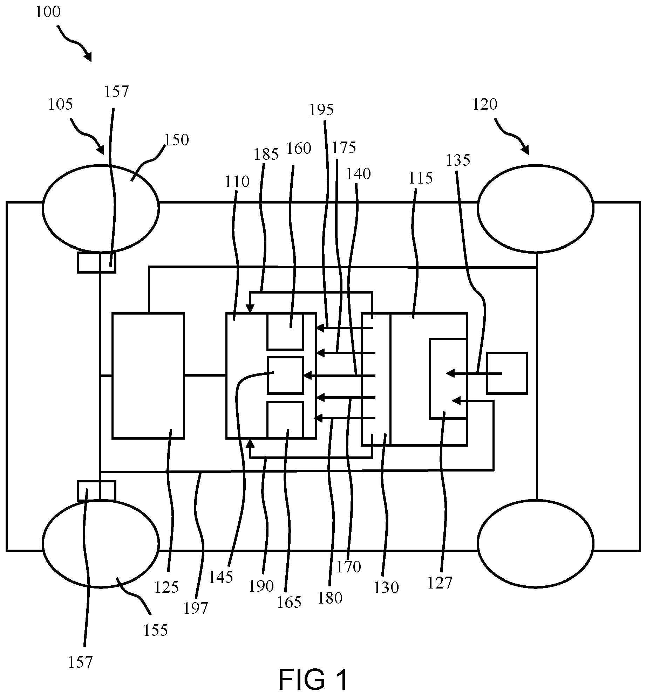

Fig. 1 zeigt eine schematische Darstellung eines hochautomatisierten Fahrzeugs 100 mit zumindest einer Lenkachse 105 und einer Antiblockiersystem-Steuereinheit 110 und mit einer Vorrichtung 115 zum Betreiben der Antiblockiersystem-Steuereinheit 110 gemäß einem Ausführungsbeispiel. Gezeigt ist eine Ansicht des Fahrzeugs 100 von oben.

Das hochautomatisierte Fahrzeug 100 ist gemäß diesem Ausführungsbeispiel als ein hochautomatisiertes Nutzfahrzeug mit zwei Achsen 105, 120 ausgeformt. Außer der lenkbaren Lenkachse 105 weist das Fahrzeug 100 gemäß diesem Ausführungsbeispiel eine Hinterachse 120 auf. Die Lenkachse 105 ist gemäß diesem Ausführungsbeispiel die Vorderachse des Fahrzeugs 100. Gemäß einem Ausführungsbeispiel ist auch die Hinterachse 120 als eine lenkbare Lenkachse 105 ausgebildet, oder das Fahrzeug 100 weist gemäß einem alternativen Ausführungsbeispiel zumindest eine weitere lenkbare Lenkachse 105 auf.

Das Fahrzeug 100 weist gemäß diesem Ausführungsbeispiel ein Antiblockiersystem 125 und die Antiblockiersystem-Steuereinheit 110 zum Steuern des Antiblockiersystems 125 auf. Die Vorrichtung 115 ist dazu ausgebildet, um die Antiblockiersystem-Steuereinheit 110 zu betreiben. Lediglich beispielhaft ist die Vorrichtung 115 gemäß diesem Ausführungsbeispiel an oder in dem Fahrzeug 100 aufgenommen. Hierbei ist die Vorrichtung 115 gemäß diesem Ausführungsbeispiel mit der Antiblockiersystem-Steuereinheit 110 signaltechnisch verbunden oder in die Antiblockiersystem-Steuereinheit 110 implementiert.

Die Vorrichtung 115 weist eine Einleseeinrichtung 127 und eine Sendeeinrichtung 130 auf. Die Einleseeinrichtung 127 ist dazu ausgebildet, um eine Aktivierungssignal 135 einzulesen, das eine aktivierte Lenkbremsfunktion des Fahrzeugs 100 und/oder eine deaktivierte elektrisch ansteuerbare Lenkfunktion des Fahrzeugs 100 repräsentiert. Die Sendeeinrichtung 130 ist dazu ausgebildet, um ansprechend auf das Aktivierungssignal 135 ein Regelsignal 140 zu senden, das dazu ausgebildet ist, um einen Regelmodus 145 zum Regeln einer ABS-Funktion der Antiblockiersystem-Steuereinheit 110 für zumindest die Lenkachse 105 des Fahrzeugs 100 einzustellen.

Gemäß diesem Ausführungsbeispiel ist die Einleseeinrichtung 127 dazu ausgebildet, um das Aktivierungssignal 135 einzulesen, das als die aktivierte Lenkbremsfunktion eine aktivierte "Steer-by-brake"-Funktion anzeigt, welche gemäß diesem Ausführungsbeispiel lediglich als Rückfallebene für eine ausgefallene elektrisch ansteuerbare Lenkfunktion des Fahrzeugs 100 aktiviert wird.

Gemäß diesem Ausführungsbeispiel ist die Sendeeinrichtung 130 dazu ausgebildet, um den Regelmodus 145 einzustellen, der dazu ausgebildet ist, um Bremsmomente des ersten Rads 150 und des zweiten Rads 155 der Lenkachse 105 zu harmonisieren, um so erzeugte Lenkmomente zu minimieren. Hierzu ist die Sendeeinrichtung 130 gemäß diesem Ausführungsbeispiel dazu ausgebildet, um das Regelsignal 140 zu senden, das dazu ausgebildet ist, um einen Regelmodus 145 einzustellen, bei dem das Rad 150, 155 der Lenkachse 105 oder des Fahrzeugs 100 mit einer geringsten Bodenhaftung einen Bremsdruck der Lenkachse 105 bestimmt. Dieser Regelmodus 145 kann auch als "Select-Low-Regelmodus" 145 bezeichnet werden. Gemäß diesem Ausführungsbeispiel kommt im Select-Low-Regelmodus 145 nur ein Drucksteuerventil pro Achse 105, 120 zum Einsatz. Gemäß diesem Ausführungsbeispiel umfasst die Antiblockiersystem-Steuereinheit 110 einstellbare weitere Regelmodi 160, 165 in Form einer "Individualregelung" 160 und einer "Individualregelung modifiziert" 165.

Bei eingestellter Individualregelung 160 wird für jedes Rad 150, 155 der Lenkachse 105 individuell ein optimaler Bremsdruck eingeregelt, der überje ein pneumatisches Ventil 157 eine Bremsung des jeweils zugeordneten Rads 150, 155 bewirkt. So werden die kürzesten Bremswege erreicht. Bei µ-Spiit-Bedingungen entsteht jedoch ein großes Giermoment. Das Fahrzeug 100 wird dann schwerer beherrschbar. Bei eingestellter "Individualregelung modifiziert" 165 kommt für jedes Rad 150, 155 der Lenkachse 105 ein Drucksteuerventil zum Einsatz. Ein Bremsdruckunterschied zwischen rechtem und linkem Vorderrad 150, 155 wird hierbei auf ein zulässiges Maß begrenzt. Es ergibt sich ein etwas längerer Bremsweg als bei der Individualregelung 160, das Giermoment wird jedoch reduziert und das Fahrzeug 100 bleibt auch bei kritischen Bremsmanövern beherrschbar. Diese beiden weiteren Regelmodi 160, 165 werden jedoch bei Anliegen des Aktivierungssignals 135 nicht eingestellt.

Gemäß diesem Ausführungsbeispiel ist die Sendeeinrichtung 130 dazu ausgebildet, um ansprechend auf das Aktivierungssignal 135 ferner ein Ventilgleichtaktsignal 170, ein Begrenzungssignal 175, ein Verringerungssignal 180, ein erstes Zielschlupfsignal 185, ein zweites Zielschlupfsignal 190 und/oder ein Hinterachssignal 195 auszugeben.

Das Ventilgleichtaktsignal 170 ist dazu ausgebildet, um eine Ansteuerung von zumindest zwei pneumatischen Regelventilen des Antiblockiersystems 125 in einem Gleichtakt zu bewirken. Das Begrenzungssignal 175 ist dazu ausgebildet, um einen maximalen Druckaufbaugradienten an zumindest der Lenkachse 105 zu begrenzen.

Gemäß einem Ausführungsbeispiel ist das Begrenzungssignal 175 dazu ausgebildet, um den maximalen Druckaufbaugradienten innerhalb einer bestimmten Zeitspanne eines Bremsvorgangs zu bewirken, gemäß diesem Ausführungsbeispiel innerhalb einer bestimmten Zeitspanne ab Beginn des Bremsvorgangs.

Das Verringerungssignal 180 ist dazu ausgebildet, um einen Zielschlupfwert für die ABS-Funktion an zumindest der Lenkachse 105 zu verringern. Das erste Zielschlupfsignal 185 ist dazu ausgebildet, um für das erste Rad 150 der Lenkachse 105 einen ersten Zielschlupfwert einzustellen und das zweite Zielschlupfsignal 190 ist dazu ausgebildet, um für das zweite Rad 155 der Lenkachse 105 einen zweiten Zielschlupfwert einzustellen, der sich von dem ersten Zielschlupfwert unterscheidet.

Die Sendeeinrichtung 130 ist dazu ausgebildet, um ansprechend auf das Aktivierungssignal 135 und unter Verwendung eines Lenksignals 197, das ein Lenkmoment an der Lenkachse 105 repräsentiert, das Hinterachssignal 195 auszugeben, das dazu ausgebildet ist, um eine Bremskraft an zumindest der Hinterachse 120 des Fahrzeugs 100 einzustellen. Hierbei wird gemäß einem Ausführungsbeispiel ein Hinterachssignal 195 ausgegeben, das dazu ausgebildet ist, um eine Bremskraft einzustellen, die dazu abgebildet ist, um ein Gieren des Fahrzeugs 100 zu verhindern. Das Lenksignal 197 repräsentiert gemäß diesem Ausführungsbeispiel ein vorbestimmtes Lenkmoment an der Lenkachse 105. Gemäß diesem Ausführungsbeispiel ist die Vorrichtung 115 dazu ausgebildet, um das Aktivierungssignal 135 von einem Fahrassistenzsystem des Fahrzeugs 100 einzulesen. Die Vorrichtung 115 ist ferner gemäß diesem Ausführungsbeispiel dazu ausgebildet, um das Lenksignal 197 von einem Sensor, einer Auswerteeinrichtung oder der Antiblockiersystem-Steuereinheit 110 einzulesen. Die Vorrichtung 115 ist dazu ausgebildet, um das Ventilgleichtaktsignal 170, Begrenzungssignal 175, Verringerungssignal 180, erste Zielschlupfsignal 185, zweite Zielschlupfsignal 190 und/oder Hinterachssignal 195 an die Antiblockiersystem-Steuereinheit 110 oder das Antiblockiersystem 125 auszugeben.

Die hier vorgestellte Vorrichtung 115 realisiert vorteilhafterweise ein ABS-Regelverfahren für die Lenkbremsfunktion "Steer-By-Brake" als Lenkungsredundanz.

Eine Aufgabe der Vorrichtung 115 ist es, die Lenkbremsfunktion "Steer-by-brake" z. B. als Rückfallebene für eine elektrisch ansteuerbare Lenkung beim hochautomatisierten Fahren möglichst optimal darzustellen, auch im Falle, dass das Fahrzeug 100 gebremst wird und sogar unter schwierigen Reibverhältnissen.

Anders als bei dem hier vorgestellten Verfahren unter Verwendung der Vorrichtung 115 entsteht beim Bremsen einzelner Räder 150, 155 als Redundanzebene für die Querführung der physikalische Effekt, dass das Bremsen eines einzelnen Vorderrades 150, 155 ein Lenkmoment erzeugt, was in Verbindung mit einem positiven Lenkrollradius zu einem Einlenken der Räder 150, 155 führt. Das funktioniert auch, wenn beide Räder 150, 155 bereits gebremst werden, indem ein entsprechender Differenzdruck zwischen linkem und rechtem Rad 150, 155 aufgebaut wird, der denselben Effekt bewirkt wie das einseitige Bremsen. Leider ergibt sich ein solcher Lenkeffekt auch dann, wenn die Räder 150, 155 bei einer Bremsung auf links und rechts unterschiedlichen Reibwerten, auch « µ-Split » genannt, durch ABS verschieden stark gebremst werden und zwar sowohl bei Geradeausfahrt als auch bei Kurvenfahrt. Dies ist das normale Regelverhalten von ABS, wenn beide Räder 150, 155 einem eigenen Regelkanal zugeordnet sind, z. B. bei der Individualregelung oder Individualregelung modifiziert.

Ein grundsätzlicher Vorteil der Vorrichtung 115 besteht nun darin, dass das Bremssystem - wenn es bei Ausfall der elektrisch ansteuerbaren Lenkung durch Steer-By-Brake die Lenkfunktion, auch kurz "SBB-Funktion" genannt, übernimmt - den ABS-Regler mindestens an der Lenkachse 105 in den Select-Low-Regelmodus 145 (oder ähnliches) schaltet, um die Bremsmomente links und rechts zu harmonisieren und damit die induzierten Lenkmomente zu minimieren. Dadurch wird beispielsweise beim Bremsen auf unterschiedlichen Reibwerten der Aufbau eines Lenkmoments vermieden oder zumindest stark abgedämpft, so dass die SBB-Funktion das Fahrzeug 100 weiterhin steuern kann.

Gemäß diesem Ausführungsbeispiel teilt die SBB-Funktion in dem Fahrzeug 100 mit einer oder auch mehreren Lenkachsen 105 in Form von gelenkten Vorderachsen, sobald sie aktiviert wird, der ABS-Funktion mit, die Vorderachse(n) 105 in den Select-Low-Regelmodus 145 (oder gleichartigen) zu setzen.

Zusätzliche Optionen sind einzeln oder in beliebiger Kombination:
- Ansteuerung der pneumatischen Regelventile für ABS, z. B. PCVs, im Gleichtakt, damit die resultierenden Bremsdrücke tatsächlich gleich verlaufen.
- Begrenzen des Druckaufbaugradienten am Anfang einer Bremsung, gemäß diesem Ausführungsbeispiel insbesondere an der oder den Lenkachsen 105 und/oder der Hinterachse 120 oder einer anderen ungelenkten Achse, um auch hier keine großen Lenkmomente entstehen zu lassen.
- Verringerung des Zielschlupfwertes für die ABS-Regelung an der Lenkachse 105, um mögliche Lenkmomente z. B. durch unterschiedliches Bremsverhalten links/rechts bedingt, weiter zu verringern und leichter ein Lenkmoment durch Erhöhen des Zielschlupfwertes an einer Achse aufbringen zu können.
- Bewusstes Induzieren eines Lenkmomentes durch unterschiedliche Zielschlupfwerte rechts und links, um das Fahrzeug 100 lateral zu Steuern.
- Balancieren der Bremskraft an der Hinterachse 120 so, dass das entstehende Giermoment gerade noch durch das Lenkmoment an der Lenkachse 105 kompensiert werden kann. Dadurch kann der Bremsweg gegenüber einer reinen Select-Low-Regelung reduziert werden.

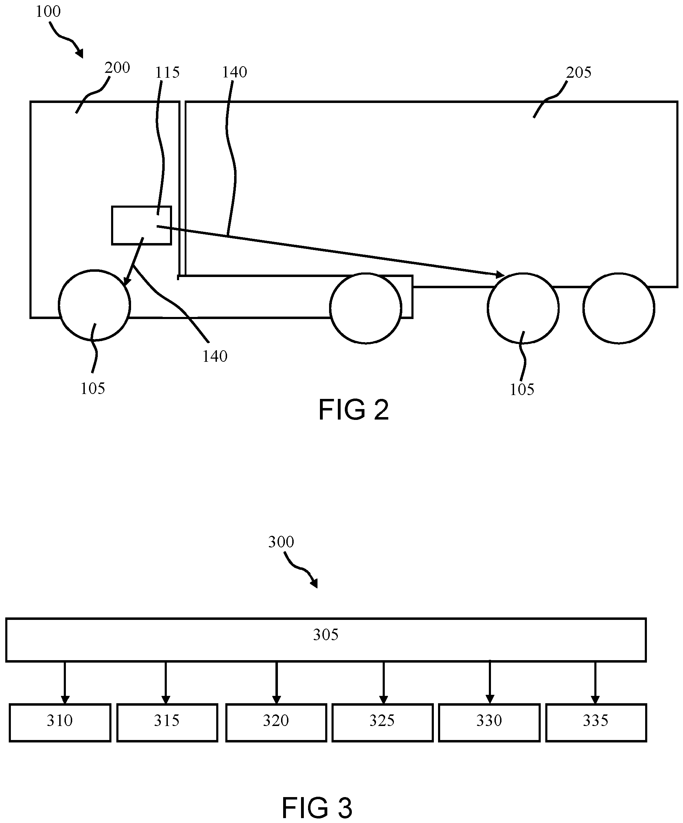

Fig. 2 zeigt eine schematische seitliche Darstellung eines Fahrzeugs 100 mit einer Vorrichtung 115 gemäß einem Ausführungsbeispiel. Dabei kann es sich um ein Ausführungsbeispiel des anhand von Fig. 1 beschriebenen Fahrzeugs 100 mit der Vorrichtung 115 handeln.

Das Fahrzeug 100 ist gemäß diesem Ausführungsbeispiel als ein Sattelkraftfahrzeug mit einer Sattelzugmaschine 200 und/oder einem Sattelauflieger 205 ausgeformt.

Gemäß diesem Ausführungsbeispiel weist die Sattelzugmaschine 200 und/oder der Sattelauflieger 205 zumindest eine oder mehrere Lenkachsen 105 auf. Die Vorrichtung 115 ist gemäß diesem Ausführungsbeispiel dazu ausgebildet, um Regelsignale 140 an eine oder mehrere Antiblockiersystem-Steuereinheiten des Sattelkraftfahrzeugs auszugeben, um den Regelmodus für mehrere oder alle Lenkachsen 105 des Sattelkraftfahrzeug einzustellen.

Die Vorrichtung 115 ist gemäß diesem Ausführungsbeispiel in oder an der Sattelzugmaschine 200 aufgenommen. Gemäß einem alternativen Ausführungsbeispiel ist die Vorrichtung 115 in oder an dem Sattelauflieger 205 aufgenommen, oder der Sattelauflieger 205 weist eine der Vorrichtung 115 entsprechende weitere Vorrichtung 115 auf.

Fig. 3 zeigt ein Ablaufdiagramm eines Verfahrens 300 zum Betreiben einer Antiblockiersystem-Steuereinheit für ein hochautomatisiertes Fahrzeug mit zumindest einer Lenkachse gemäß einem Ausführungsbeispiel. Dabei kann es sich um die in Fig. 1 oder 2 beschriebene Antiblockiersystem-Steuereinheit handeln. Das Verfahren 300 ist von der in Fig. 1 oder 2 beschriebenen Vorrichtung ausführbar oder ansteuerbar.

Das Verfahren 300 weist einen Schritt 305 des Einlesens und einen Schritt 310 des Sendens auf. Im Schritt 305 des Einlesens wird ein Aktivierungssignal eingelesen, das eine aktivierte Lenkbremsfunktion des Fahrzeugs und/oder eine deaktivierte elektrisch ansteuerbare Lenkfunktion des Fahrzeugs repräsentiert. Im Schritt 310 des Sendens wird ansprechend auf das Aktivierungssignal ein Regelsignal gesendet, das dazu ausgebildet ist, um einen Regelmodus zum Regeln einer ABS-Funktion der Antiblockiersystem-Steuereinheit für zumindest die Lenkachse des Fahrzeugs einzustellen.

Optional weist das Verfahren 300 gemäß diesem Ausführungsbeispiel einen Schritt 315 des Ansteuerns, einen Schritt 320 des Begrenzens, einen Schritt 325 des Verringerns, einen Schritt 330 des Einstellens und/oder einen Schritt 335 des Ausgebens auf.

Im Schritt 315 des Ansteuerns wird ansprechend auf das Aktivierungssignal ein Ventilgleichtaktsignal ausgegeben, das dazu ausgebildet ist, um eine Ansteuerung von zumindest zwei pneumatischen Regelventilen eines Antiblockiersystems in einem Gleichtakt zu bewirken. Im Schritt 320 des Begrenzens wird ansprechend auf das Aktivierungssignal ein Begrenzungssignal ausgegeben, das dazu ausgebildet ist, um einen maximalen Druckaufbaugradienten an zumindest der Lenkachse zu begrenzen. Im Schritt 325 des Verringerns wird ansprechend auf das Aktivierungssignal ein Verringerungssignal ausgegeben, das dazu ausgebildet ist, um einen Zielschlupfwert für die ABS-Funktion an zumindest der Lenkachse zu verringern. Im Schritt 330 des Einstellens werden ansprechend auf das Aktivierungssignal ein erstes Zielschlupfsignal ausgegeben, das dazu ausgebildet ist, um für das erste Rad der Lenkachse einen ersten Zielschlupfwert einzustellen und es wird ein zweites Zielschlupfsignal ausgegeben, das dazu ausgebildet ist, um für das zweite Rad der Lenkachse einen zweiten Zielschlupfwert einzustellen, der sich von dem ersten Zielschlupfwert unterscheidet. Im Schritt 335 des Ausgebens wird ansprechend auf das Aktivierungssignal und unter Verwendung eines Lenksignals, das ein Lenkmoment an der Lenkachse repräsentiert, ein Hinterachssignal ausgegeben, das dazu ausgebildet ist, um eine Bremskraft an zumindest einer Hinterachse des Fahrzeugs einzustellen.

Die hier vorgestellten Verfahrensschritte können wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: hochautomatisiertes Fahrzeug
- 105: Lenkachse
- 110: Antiblockiersystem-Steuereinheit
- 115: Vorrichtung
- 120: Hinterachse
- 125: Antiblockiersystem
- 127: Einleseeinrichtung
- 130: Sendeeinrichtung
- 135: Aktivierungssignal
- 140: Regelsignal
- 145: Regelmodus
- 150: erstes Rad
- 155: zweites Rad
- 157: pneumatisches Ventil
- 160: Individualregelung
- 165: Individualregelung modifiziert
- 170: Ventilgleichtaktsignal
- 175: Begrenzungssignal
- 180: Verringerungssignal
- 185: erstes Zielschlupfsignal
- 190: zweites Zielschlupfsignal
- 195: Hinterachssignal
- 197: Lenksignal

- 200: Sattelzugmaschine
- 205: Sattelauflieger

- 300: Verfahren zum Betreiben einer Antiblockiersystem-Steuereinheit für ein hochautomatisiertes Fahrzeug mit zumindest einer Lenkachse
- 305: Schritt des Einlesens
- 310: Schritt des Sendens
- 315: Schritt des Ansteuerns
- 320: Schritt des Begrenzens
- 325: Schritt des Verringerns
- 330: Schritt des Einstellens
- 335: Schritt des Ausgebens

## Patentansprüche

1. Verfahren (300) zum Betreiben einer Antiblockiersystem-Steuereinheit (110) für ein hochautomatisiertes Fahrzeug (100) mit zumindest einer Lenkachse (105), wobei das Verfahren (300) die folgenden Schritte aufweist:
Einlesen (305) eines Aktivierungssignals (135), das eine aktivierte Lenkbremsfunktion des Fahrzeugs (100) und eine deaktivierte elektrisch ansteuerbare Lenkfunktion des Fahrzeugs (100) repräsentiert; und
Senden (310) eines Regelsignals (140) unter Verwendung des Aktivierungssignals, wobei das Regelsignal (140) dazu ausgebildet ist, um einen Regelmodus (145) zum Regeln einer ABS-Funktion der Antiblockiersystem-Steuereinheit (110) für zumindest die Lenkachse (105) des Fahrzeugs (100) einzustellen.

2. Verfahren (300) gemäß Anspruch 1, bei dem im Schritt (310) des Senden das Regelsignal (140) gesendet wird, das dazu ausgebildet ist, um einen Regelmodus (145) der ABS-Funktion für zumindest die Lenkachse (105) einzustellen, bei dem dasjenige Rad (150, 155) der Lenkachse (105) oder des Fahrzeugs (100) mit einer geringsten Bodenhaftung und/oder Bodenreibung einen Bremsdruck der Lenkachse (105) bestimmt.

3. Verfahren (300) gemäß einem der vorangegangenen Ansprüche, mit einem Schritt (315) des Ansteuerns, in dem ansprechend auf das Aktivierungssignal (135) ein Ventilgleichtaktsignal (170) ausgegeben wird, das dazu ausgebildet ist, um eine Ansteuerung von zumindest zwei pneumatischen Regelventilen eines Antiblockiersystems (125) in einem Gleichtakt zu bewirken.

4. Verfahren (300) gemäß einem der vorangegangenen Ansprüche, mit einem Schritt (320) des Begrenzens, in dem ansprechend auf das Aktivierungssignal (135) ein Begrenzungssignal (175) ausgegeben wird, das dazu ausgebildet ist, um einen maximalen Druckaufbaugradienten für ein pneunatisches Ventil (157) an zumindest der Lenkachse (105) zu begrenzen.

5. Verfahren (300) gemäß einem der vorangegangenen Ansprüche, mit einem Schritt (325) des Verringerns, in dem ansprechend auf das Aktivierungssignal (135) ein Verringerungssignal (180) ausgegeben wird, das dazu ausgebildet ist, um einen Zielschlupfwert für die ABS-Funktion an zumindest der Lenkachse (105) zu verringern.

6. Verfahren (300) gemäß einem der vorangegangenen Ansprüche, mit einem Schritt (330) des Einstellens, in dem ansprechend auf das Aktivierungssignal (135) ein erstes Zielschlupfsignal (185) ausgegeben wird, das dazu ausgebildet ist, um für das erste Rad (150) der Lenkachse (105) einen ersten Zielschlupfwert einzustellen und ein zweites Zielschlupfsignal (190) ausgegeben wird, das dazu ausgebildet ist, um für das zweite Rad (155) der Lenkachse (105) einen zweiten Zielschlupfwert einzustellen, der sich von dem ersten Zielschlupfwert unterscheidet.

7. Verfahren (300) gemäß einem der vorangegangenen Ansprüche, mit einem Schritt (335) des Ausgebens, in dem ansprechend auf das Aktivierungssignal (135) und unter Verwendung eines Lenksignals (197), das ein Lenkmoment an der Lenkachse (105) repräsentiert, ein Hinterachssignal (195) ausgegeben wird, das dazu ausgebildet ist, um eine Bremskraft an zumindest einer Hinterachse (120) des Fahrzeugs (100) einzustellen.

8. Vorrichtung (115), die eingerichtet ist, um die Schritte (305, 310) des Verfahrens (300) gemäß einem der vorangegangenen Ansprüche in entsprechenden Einheiten (127, 130) auszuführen und/oder anzusteuern.

9. Antiblockiersystem-Steuereinheit (110) mit einer Vorrichtung (115) gemäß Anspruch 8 für ein hochautomatisiertes Fahrzeug (100) mit zumindest einer Lenkachse (105).

10. Computerprogramm, das dazu eingerichtet ist, das Verfahren (300) gemäß einem der Ansprüche 1 bis 7 auszuführen und/oder anzusteuern.

11. Maschinenlesbares Speichermedium, auf dem das Computerprogramm nach Anspruch 10 gespeichert ist.

## Claims

1. Method (300) for operating an anti-lock braking system control unit (110) for a highly-automated vehicle (100) with at least one steering axle (105), wherein the method (300) comprises the following steps:
reading in (305) an activation signal (135), which represents an activated steering brake function of the vehicle (100) and a deactivated electrically actuatable steering function of the vehicle (100); and
transmitting (310) a control signal (140) using the activation signal, wherein the control signal (140) is configured for setting a control mode (145) for controlling an ABS function of the anti-lock braking system control unit (110) for at least the steering axle (105) of the vehicle (100).

2. Method (300) according to claim 1, wherein in the transmitting step (310) the control signal (140) is transmitted which is for setting a control mode (145) of the ABS function for at least the steering axle (105), in which the wheel (150, 155) of the steering axle (105) or of the vehicle (100) having a lowest ground adhesion and/or ground friction determines a braking pressure of the steering axle (105).

3. Method (300) according to any one of the preceding claims, with an actuating step (315), in which, in response to the activation signal (135), a valve synchronous operation signal (170) is output which is for effecting an actuation of at least two pneumatic control valves of an anti-lock braking system (125) in a synchronous operation.

4. Method (300) according to any one of the preceding claims, with a limitation step (320), in which, in response to the activation signal (135), a limitation signal (175) is output which is for limiting a maximum pressure build-up gradient for a pneumatic valve (157) at at least the steering axle (105).

5. Method (300) according to any one of the preceding claims, with a reduction step (325), in which, in response to the activation signal (135), a reduction signal (180) is output, which is for reducing a target slip value for the ABS function at at least the steering axle (105).

6. Method (300) according to any one of the preceding claims, with a setting step (330), in which, in response to the activation signal (135), a first target slip signal (185) is output, which is for setting a first target slip value for the first wheel (150) of the steering axle (105), and a second target slip signal (190) is output which is for setting a second target slip value, which differs from the first target slip value, for the second wheel (155) of the steering axle (105).

7. Method (300) according to any one of the preceding claims, with an outputting step (335), in which, in response to the activation signal (135) and using a steering signal (197), which represents a steering torque at the steering axle (105), a rear axle signal (195) is output for setting a braking force at at least a rear axle (120) of the vehicle (100).

8. Apparatus (115), which is set up for executing and/or controlling the steps (305, 310) of the method (300) according to any one of the preceding claims in corresponding units (127, 130).

9. Anti-lock braking system control unit (110) with a device (115) according to claim 8 for a highly-automated vehicle (100) having at least one steering axle (105).

10. Computer program, which is set up to execute and/or control the method (300) according to any one of claims 1 to 7.

11. Machine-readable storage medium on which the computer program according to claim 10 is stored.

## Revendications

1. Procédé (300) de fonctionnement d'un dispositif de commande de système antiblocage (100) pour un véhicule (100) hautement automatisé avec au moins un essieu directeur (105), dans lequel le procédé (300) présente les étapes suivantes :
la lecture (305) d'un signal d'activation (135) qui représente une fonction de frein de direction activée du véhicule (100) et une fonction de direction commandable électriquement désactivée du véhicule (100) ; et
l'émission (310) d'un signal de régulation (140) en utilisant le signal d'activation, dans lequel le signal de régulation (140) est réalisé afin de régler un mode de régulation (145) pour la régulation d'une fonction ABS du dispositif de commande de système antiblocage (110) pour au moins l'essieu directeur (105) du véhicule (100).

2. Procédé (300) selon la revendication 1, pour lequel dans l'étape (310) d'émission, le signal de régulation (140) est émis, lequel est réalisé afin de régler un mode de régulation (145) de la fonction ABS pour au moins l'essieu directeur (105), pour lequel la roue (150, 155) de l'essieu directeur (105) ou du véhicule (100) avec une adhérence au sol et/ou friction au sol la plus faible détermine une pression de freinage de l'essieu directeur (105).

3. Procédé (300) selon l'une des revendications précédentes, avec une étape (315) de commande, dans laquelle en réponse au signal d'activation (135), un signal en mode commun de soupape (170) est émis, lequel est réalisé afin de provoquer une commande d'au moins deux soupapes de régulation pneumatiques d'un système antiblocage (125) dans un mode commun.

4. Procédé (300) selon l'une des revendications précédentes, avec une étape (320) de limitation, dans lequel en réponse au signal d'activation (135) un signal de limitation (175) est émis, lequel est réalisé afin de limiter un gradient d'établissement de pression maximal pour une soupape (157) pneumatique à au moins l'essieu directeur (105).

5. Procédé (300) selon l'une des revendications précédentes, avec une étape (325) de diminution, dans lequel en réponse au signal d'activation (135), un signal de diminution (180) est émis, lequel est réalisé afin de diminuer une valeur de patinage cible pour la fonction ABS sur au moins l'essieu directeur (105).

6. Procédé (300) selon l'une des revendications précédentes, avec une étape (330) de réglage, dans lequel en réponse au signal d'activation (135), un premier signal de patinage cible (185) est émis, lequel est réalisé afin de régler pour la première roue (150) de l'essieu directeur (105) une première valeur de patinage cible et un second signal de patinage cible (190) est émis, lequel est réalisé afin de régler pour la seconde roue (155) de l'essieu directeur (105) une seconde valeur de patinage cible qui se distingue de la première valeur de patinage cible.

7. Procédé (300) selon l'une des revendications précédentes, avec une étape (335) d'émission, dans laquelle en réponse au signal d'activation (135) et en utilisant un signal de direction (197) qui représente un moment de direction sur l'essieu directeur (105), un signal d'essieu arrière (195) est émis, lequel est réalisé afin de régler une force de freinage sur au moins un essieu arrière (120) du véhicule (100).

8. Dispositif (115) qui est conçu afin de réaliser/ou de commander les étapes (305, 310) du procédé (300) selon l'une des revendications précédentes dans des unités correspondantes (127, 130).

9. Dispositif de commande de système antiblocage (110) avec un dispositif (115) selon la revendication 8 pour un véhicule (100) hautement automatisé avec au moins un essieu directeur (105).

10. Programme informatique qui est conçu afin de réaliser et/ou commander le procédé (300) selon l'une des revendications 1 à 7.

11. Support de stockage lisible sur machine, sur lequel le programme informatique selon la revendication 10 est sauvegardé.
